# EUROPEAN PATENT APPLICATION

(11) **EP 1 860 580 A2**
(43) Date of publication of application: **28.11.2007**
(21) Application number: 07251839.2
(22) Date of filing: 02.05.2007
(51) Int. Cl.: G06F 17/30

(54) **Information providing method, information providing apparatus, and recording medium**

(30) Priority: 15.05.2006 JP 2006134823
(71) Applicant: Sony Corporation, Minato-ku Tokyo 108-0075 (JP)
(72) Inventor: Terauchi, Toshiro, Tokyo 108-0075 (JP); Sasaki, Toru, Tokyo 108-0075 (JP); Sako, Yoichiro, Tokyo 108-0075 (JP); Takehara, Mitsuru, Tokyo 108-0075 (JP); Nakamura, Takatoshi, Tokyo 108-0075 (JP); Abe, Yuichi, Tokyo 108-0075 (JP)
(74) Representative: Mills, Julia

(57) **Abstract**

An information providing method includes a step of setting a relative chronological scale having a reference year set to be a calendar year designated as a birth year or a calendar year of a birth year calculated from a designated age, creating a chronology in which pieces of information related to individual eras on the relative chronological scale are indicated, and displaying the created chronology on a display, and a step of changing a range of era presented on the display of the chronology in response to a change instruction.

## Description

The present invention contains subject matter related to Japanese Patent Application JP 2006-134823 filed in the Japanese Patent Office on May 15, 2006.

The present invention relates to the field of information providing method, information providing apparatus, and recording medium. Illustrative embodiments relate to a method and an apparatus for providing a user with information regarding music that became hits, movies that were released, and events that occurred, etc., during specific years or when the user was a specific age.

Every year, many pieces of content such as music are introduced and released while many social events occur. Some of these pieces of content may have been obtained by users. Such users may wish to search for information as to what events occurred, what music became a hit, what movies were released, etc., during what years or when they were what age and also select a piece of content from among the information obtained by the search. To permit such user operations, a certain technique may be necessary.

As a simple scheme, a technique has been developed for providing users with information in the form of a chronology, in which calendar years are simply arranged in sequential order, such as "1990: 'abc' was released, 1991: 'def' became a hit, 1992: 'ghi' was screened, 1993: ...".

In addition, Japanese Unexamined Patent Application Publication No. 2006-4152 discloses another technique for providing such information to users. In this technique, an era search execution screen is displayed on an initialization screen when a user enters his or her birth date or current age. When the user designates an era (school grade or age), such as tenth grade or sixteen years old on this era search execution screen, titles of music or the like which were released or became hits in a calendar year corresponding to the designated era (for example, "1983", where "1967" as the birth year or "38" as the current age is entered in 2005 and tenth grade or "16" is designated as the era) are displayed in a search result screen.

However, in the above technique, in which information pieces are provided in the form of a chronology in which calendar years are simply arranged in sequential order, the information pieces are provided on an absolute time scale, which is based on the calendar years in the above case. Thus, a user has to calculate what era of his or her life corresponds to each of the provided information pieces (not many users can quickly know how old they were in 1985, for example). This causes inconvenience to the user in searching for information pieces related to his or her childhood and adolescence.

In addition, for example, if a user wish to search for information as to what music became a hit when the user was twenty-four years old (for example, in 2004) and what music became a hit when his or her father was twenty-four years old (for example, in 1969), the above technique does not allow the user to easily and quickly compare and contrast the pieces of information obtained by the search at the same point on a chronological scale.

In the other technique described above, which is disclosed in Japanese Unexamined Patent Application Publication No. 2006-4152, a user is not only supposed to enter his or her birth year or current age but also to designate an era of his or her life. Thus, when the user searches for information related to one era and information related to another era, the user has to repeat operations for designating these eras, which increases complexity of user operations.

In addition, this technique does not also allow a user to easily and quickly compare and contrast information related to an era in the user's life and information related to the same era in his or her father's life.

The present invention has been made in view of the above circumstances. Accordingly, there is a need for a technique which permits a user to readily search for information related to an era in the life of user and information related to an era in the life of his or her father, child, or the like, and to compare and contrast the information pieces related to the user's eras and to his or her father's or child's corresponding eras.

Various respective aspects and features of the invention are defined in the appended claims. Features from the dependent claims may be combined with features of the independent claims as appropriate and not merely as explicitly set out in the claims.

An information providing method according to an embodiment of the present invention includes a step of setting a relative chronological scale having a reference year set to be a calendar year designated as a birth year or a calendar year of a birth year calculated from a designated age, creating a chronology in which pieces of information related to individual eras on the relative chronological scale are indicated, and displaying the created chronology on a display, and a step of changing a range of era presented on the display of the chronology in response to a change instruction.

In this information providing method, when a user enters the birth year of the user or the birth year of his or her father, child, or the like, or the current age of the user or the current age of his or her father, child, or the like, controlling means of an apparatus sets a relative chronological scale with a reference year (the age of zero) set to be the designated birth year or a reference year (the age of zero) set to be a birth year calculated from the designated age. The control means also creates a chronology in which pieces of information related to individual eras on the relative chronological scale is indicated and displays the created chronology on a display.

For example, when the user enters a value 1980, which represents his or her birth year, the year of 1980 is set as a reference year (the age of zero) on the relative chronological scale. On the basis of the reference year, a chronology corresponding to the reference year and later years is created and displayed. This chronology can indicate information pieces such as "age of 0: 'abc' was released, age of 1: 'def' became a hit, age of 2: 'ghi' was screened, age of 3: ...".

In addition, for example, when the user enters a value 61, which represents his current age in 2006, the year of 1945 obtained by subtracting 61 from 2006 is set as a reference year (age of zero). Then a chronology corresponding to the reference year (age of zero) and later years is created and displayed. This chronology can indicate information pieces such as "age of 0: the end of War, age of 1 : 'j kl' was screened, age of 2: 'nmo' became a hit, age of 3: ...".

In some cases, it may not be possible to display information pieces related to all eras of a user's life ranging from when his or her age was zero to his or her current age, or otherwise, it is difficult to view the displayed information pieces. In such a case, the user instructs a change of a displayed range of era. In response to the user instruction, controlling means of the apparatus changes the era range presented on the display of the above-mentioned chronology with the relative chronological scale by a predetermined number of years, such as from an era corresponding to the ages of under ten (i.e., from the age of zero to nine) to an era corresponding to the teen years (i.e., from the age of ten to nineteen). Alternatively, in response to the user instruction, the controlling means changes the length of a displayed era range, for example, from a long era range covering all ages including the age of zero to the current age or thirty years to a short era range covering five years or ten years.

In addition, when a user enters a plurality of calendar years (birth years) or ages, the controlling means of the apparatus creates a comparative chronology as the chronology, in which a plurality of chronologies corresponding to the plurality of calendar years or ages are presented on a common relative chronological scale and displays the comparative chronology on a display. With this configuration, the user can readily and quickly compare and contrast information related to an era when the user was a certain age and information related to an era when his or her father was the same age, at the same point on the relative chronological scale.

As described above, according to an embodiment of the present invention, a user can easily search for information related to each era in the life of the user and information related to each era in the life of his or her father, child, or the like and compare and contrast the information pieces related to eras of the user's life and to a corresponding eras of his or her father's or child's life, without calculating corresponding eras between the user and his or her father, child, or the like.

The invention will now be described by way of example with reference to the accompanying drawings, throughout which like parts are referred to by like references, and in which:
Fig. 1 illustrates a user terminal as an example of an information providing apparatus according to an embodiment of the present invention;
Fig. 2 illustrates an example of an appearance configuration of a user terminal;
Fig. 3A illustrates an example of an input screen;
Fig. 3B illustrates an example of an input screen;
Fig. 4 illustrates an example of a chronology screen;
Fig. 5 illustrates an example of a chronology screen presented after a range of era is changed;
Fig. 6 illustrates an example of information providing processing to be performed by a control unit of a user terminal;
Fig. 7 illustrates an example of a comparative chronology screen;
Fig. 8 illustrates an example of a comparative chronology screen presented after a range of era is changed; and
Fig. 9 illustrates an example of a comparative chronology screen presented after a range of era is changed.

### [1. System configuration]

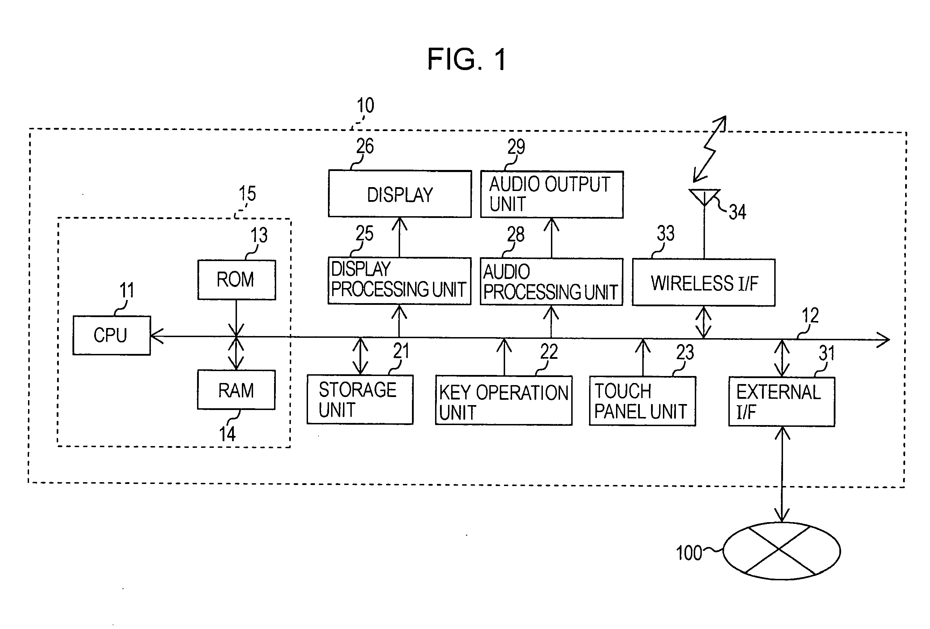

Fig. 1 illustrates a user terminal as an example of an apparatus for executing an information providing method according to an embodiment of the present invention.

As illustrated in the figure, a user terminal 10 has functions not only to provide information by displaying a chronology with a relative chronological scale but also to reproduce data such as audio (music, narrations, conversations, sound effects, etc.), images (movies, animations, still images, etc.), texts, vibrations, light, and so forth, as pieces of content associated with information pieces indicated in the chronology.

Specifically, the user terminal 10 has a CPU 11 with a bus 12 connected to a ROM (read-only memory) 13 to which various programs including information providing program according to an embodiment of the present invention and data are written and a RAM (random access memory) 14 into which programs and data are expanded. The CPU 11, the ROM 13, and the RAM 14, which are interconnected through the bus 12, constitute a control unit 15.

The bus 12 is connected to a storage unit 21, a key operation unit 22, and a touch panel unit 23. The bus 12 is also connected to a display 26 such as a liquid crystal display through a display processing unit 25 and to an audio output unit 29 through an audio processing unit 28.

The storage unit 21 can be an internal storage device built into the user terminal 10, such as a semiconductor memory and a hard disk, or can be an external storage device mounted or connected to the user terminal 10, such as an optical disk and a memory card. The storage unit 21 stores, for example, information pieces related to calendar years, such as "1954: the movie 'Turinese Holiday' became a huge hit", "1969: Apollo 11 mission achieved the first human landing on the moon", and "2004: 'Turinese Holiday' 50th anniversary memorial show", and also stores content data such as music data and image data.

The touch panel unit 23 includes a touch panel provided on a display screen of the display 26 and a position detecting unit. The display processing unit 25 serves to process data such as an image and information to be displayed on the display 26. The audio output unit 29 includes an audio amplifying circuit and a speaker or a headphone connected to the audio amplifying circuit.

The bus 12 is also connected to an external interface 31 for connecting to the Internet 100 and to an antenna 34 through a wireless interface 33. However, when all pieces of information to be presented and all pieces of content to be reproduced are stored in the storage unit 21, the external interface 31, the wireless interface 33, and the antenna 34 may not be necessary.

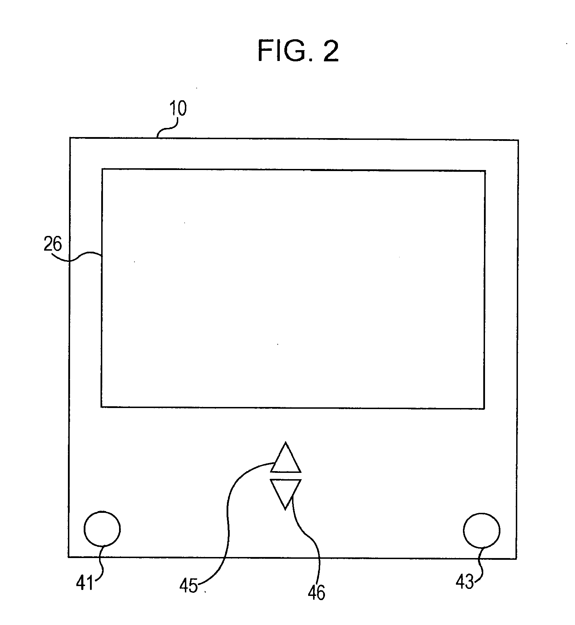

Fig. 2 illustrates an example of an appearance configuration of the user terminal 10. In this example, the display 26 is configured to have a relatively large screen. In addition, as components of the key operation unit 22 mentioned above, a power key 41, a search key 43, an up key 45, and a down key 46 are provided. The up key 45 and the down key 46 serve to change an era range presented on a chronology screen of the display 26 with a relative chronological scale, which will be described below.

### [2. Methods of providing information and reproducing contents]

### (2-1. Entering of birth year or age)

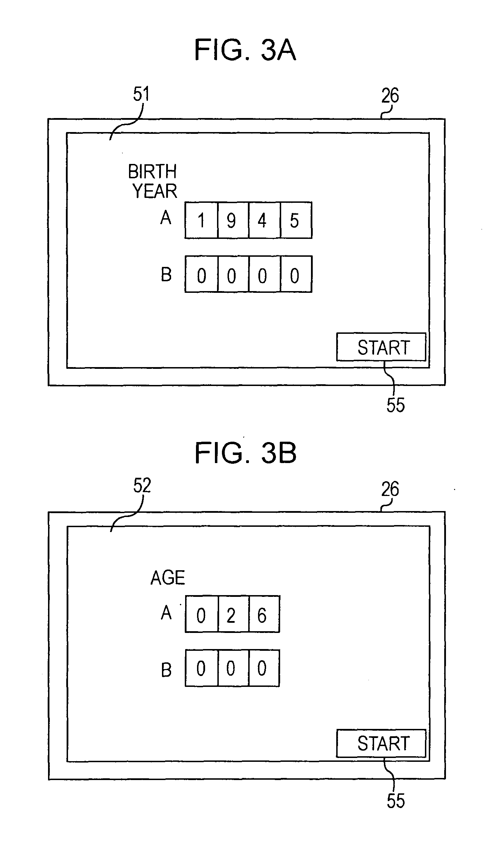

In the user terminal 10 described above, an input screen as illustrated in Fig. 3A or Fig. 3B is displayed on the display 26 when a user turns on the power of the user terminal 10 by pressing the power key 41 or when the user presses the search key 43 while the power of the user terminal 10 is on.

An input screen 51 illustrated in Fig. 3A permits entering of two values representing birth years, which are represented as "A" and "B" in this example. For example, the user enters "A" as the birth year of the user or enters "A" and "B" as the birth year of the user and the birth year of his or her father, respectively.

An input screen 52 illustrated in Fig. 3B permits entering of values representing ages, which are represented as "A" and "B" in this example. For example, the user enters "A" as the age of the user or enters "A" and "B" as the age of the user and the age of his or her father, respectively.

The entering of a birth year or an age can be performed, for example, by touching a position corresponding to each digit of the value of the birth year or age on the touch panel of the display 26 using a finger or a touch pen so as to change the value of each digit.

After entering the birth year or the age, the user touch a start button 55 provided on the input screen 51 or 52 such that the user terminal 10 initiates a search.

### (2-2. Creation and display of chronology, selection and reproduction of content)

When a birth year or an age is entered and initiation of a search is instructed as described above, the control unit 15 of the user terminal 10 sets a relative chronological scale with a reference year set to be the entered birth year (i.e., the age of zero) or a reference year set to be a birth year (i.e., the age of zero) calculated from the entered age. Then, the control unit 15 creates a chronology indicating information related to each era provided on the relative chronological scale and displays the created chronology on the display 26.

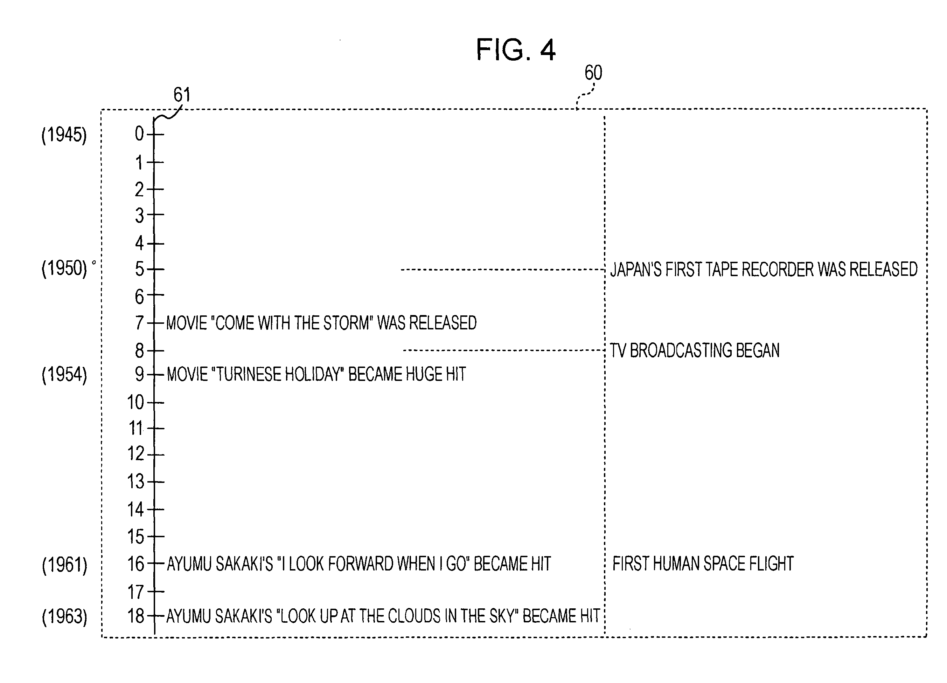

For example, as illustrated in Fig. 3A, when a value 1945 is entered as a birth year "A", the control unit 15 sets a relative chronological scale 61 in which, as illustrated in Fig. 4, the year of 1945 corresponds to the age of zero, the year of 1946 corresponds to the age of one, the year of 1947 corresponds to the age of two, and so forth. The control unit 15 also creates a chronology in which information pieces related to the calendar years of 1945 and later are presented on a side of the relative chronological scale 61 so as to be associated with the relative chronological scale 61. Then, the control unit 15 displays a range of era included in the chronology as a chronology screen 60, as illustrated in Fig. 4.

For example, when a value 26 is entered as an age "A", as illustrated in Fig. 3B, the control unit 15 sets a relative chronological scale in which, if the current year is 2006, the year of 1980, which is obtained by subtracting 26 from 2006, corresponds to the age of zero, the year of 1981 corresponds to the age of one, and the year of 1982 corresponds to the age of two. The control unit 15 also creates a chronology in which information pieces related to the calendar years of 1980 and later are presented on a side of the relative chronological scale 61 so as to be associated with the relative chronological scale 61. Then, the control unit 15 displays a range of eras included in the chronology as a chronology screen 60.

The era range in the chronology which is displayed on the display 26 is optimized in accordance with the size of the screen of the display 26 and the amount of information corresponding to each era. The example of Fig. 4 illustrates a case where an era range of nineteen years from the age of zero to eighteen (from the year of 1945 to 1963 in the calendar years) is presented.

With this arrangement, a user is allowed to readily search for what music were released or became hits, what movies were released, and what events occurred, for example, during his or her childhood.

Specifically, in the case of the example of Fig. 4, it can be seen that a movie named "Turinese holiday" became a huge hit when the user was nine years old and that music named "I look forward when I go" sang by Ayumu Sakaki became a hit and the first human space flight was achieved when the user was sixteen years old, that music named "Look up at the clouds in the sky" sang by Ayumu Sakaki became a hit when the user was eighteen years old, and so forth.

When the user searches for information related to an era which is not currently displayed on the chronology screen 60, the user operates the up key 45 or down key 46 to change the era range presented on the chronology screen 60.

Specifically, in this example, when the up key 45 is pressed once, the era range displayed on the chronology screen 60 is retrograded by one year. When the down key 46 is pressed once, the era range displayed on the chronology screen 60 is advanced toward the present by one year. When the up key 45 or the down key 46 is long-pressed, the era range presented on the chronology screen 60 is retrograded or advanced, respectively, while the key is kept pressed.

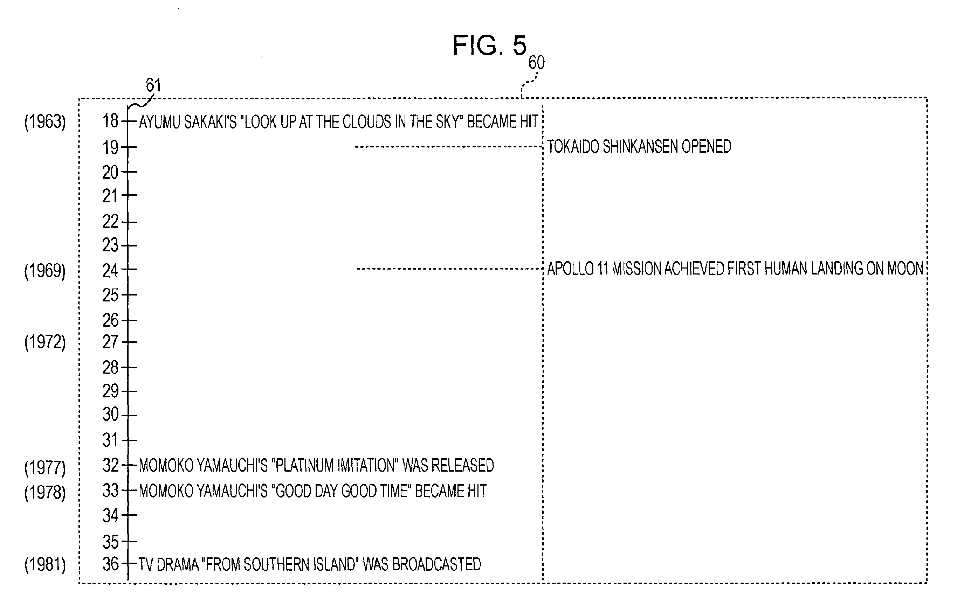

Fig. 5 illustrates display of the chronology screen 60 in which an era range of nineteen years from the age of eighteen to thirty six (from the year of 1963 to 1981 in the calendar years). This display is obtained when the user operates the down key 46 while the era range for nineteen years from the age of zero to eighteen (from the year of 1945 to 1963 in the calendar years) is being presented, as illustrated in Fig. 4.

With this arrangement, the user is allowed to readily search for what music were released or became hits, what movies were released, and what events occurred, for example, during his or her youth.

Specifically, in the example of Fig. 5, it can be seen that the first human space flight was achieved when the user was twenty-four years old, music named "Platinum imitation" sang by Momoko Yamauchi was released when the user was thirty-two years old, that music named "Good day good time" sang by Momoko Yamauchi became a hit when the user was thirty-three years old, that a TV drama named "From southern island" was broadcasted when the user was thirty-six years old, and so forth.

In this example, as described above, the information pieces presented in the chronology can include pieces of information related pieces of content such as music and movies. For such an information piece related to music, music data of the music is stored in the storage unit 21.

In addition, the information pieces presented in the chronology can include information pieces that are not directly related to pieces of content but to events, such as "Apollo 11 mission achieved the first human landing on the moon". For such an information piece, if content data which is associated with the event, such as an image (for example, an image of an astronaut stepping on the moon), audio (for example, conversation conducted between an astronaut and a ground control center), and a text (an news article covering the moon landing), is stored in the storage unit 21, an indicator such as a flag notifying the presence of an associated content and a thumbnail of an associated image is displayed at a position where the information piece related to the event is presented in the chronology screen 60.

If the chronology screen 60 includes such an indicator of music or an image desired by the user, the user touches a position corresponding to the desired music or image.

In response to the user operation, the control unit 15 reads from the storage unit 21 the data of the content designated by the user. If the designated content is music or voice, the control unit 15 causes the audio processing unit 28 to process music data or voice data and causes the audio output unit 29 to output the processed data. If the designated content is an image or a text, the control unit 15 causes the display processing unit 25 to process image data or text data so that the image or text is presented on the display 26.

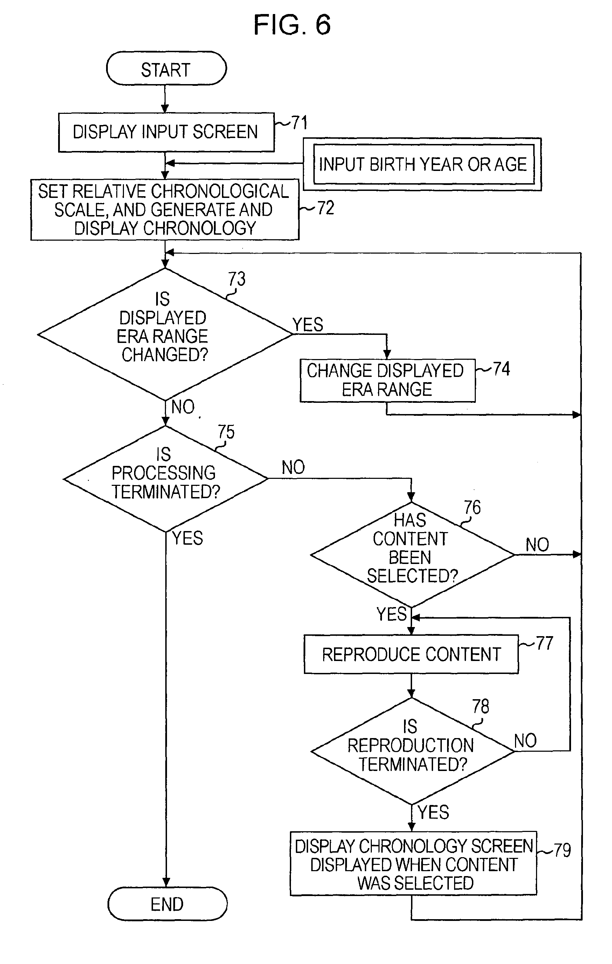

Fig. 6 illustrates an example of a processing procedure related to information provision and content reproduction to be executed by the control unit 15 of the user terminal 10.

In this example, the control unit 15 initiates the entire processing in response to a long press of the power key 41 or the search key 43 as described above. At STEP 71, the control unit 15 displays an input screen as illustrated in Fig. 3A or Fig. 3B on the display 26.

When a user enters a birth year or an age and then touches the start button 55, the control unit 15 proceeds to STEP 72 and sets a relative chronological scale to create a chronology, as described above. Then, the control unit 15 displays the chronology as the chronology screen 60 as illustrated in Fig. 4.

At STEP 73, the control unit 15 determines whether or not an operation of changing a presented era range has been performed through the up key 45 or the down key 46. If it is determined that the change operation has been performed, the control unit 15 proceeds to STEP 74 to change the era range in the chronology presented as the chronology screen 60 and then returns to STEP 73.

On the other hand, if it is determined in STEP 73 that the change operation has not been performed, the control unit 15 proceeds to STEP 75 to determine where or not to terminate the processing procedure of information provision and content reproduction. At this time, the control unit 15 terminates the processing procedure, if the power key 41 is pressed again so that the power of the user terminal 10 is turned off, or if the search key 43 is pressed again. If not, the control unit 15 proceeds to STEP 76 to determine whether or not a piece of content has been selected.

If it is determined that a piece of content has not been selected, the control unit 15 returns to STEP 73. On the other hand, if it is detained that a piece of content has been selected by touching a position corresponding to the content, the control unit 15 proceeds to STEP 77 to reproduce the selected content.

Then, the control unit 15 proceeds to STEP 78 to determine whether or not to terminate the content reproducing operation. If it determined not to terminate the content reproducing operation, the control unit 15 returns to STEP 77 to continue the content reproducing operation. On the other hand, the control unit 15 proceeds to STEP 79 to terminate the content reproducing operation, when an instruction to terminate the content reproducing operation is received from a user, or when the selected content, such as a moving image or a series of still images to be sequentially presented, has been reproduced to the end. Then the control until 15 displays the chronology screen 60 that had been displayed when the piece of content was selected.

However, in a case where a piece of content such as music, which is not to be presented on the display 26, is selected, the chronology screen 60 can be kept displayed on the display 26 while the content is being reproduced.

### (2-3. Operation where a plurality of birth years or ages are entered)

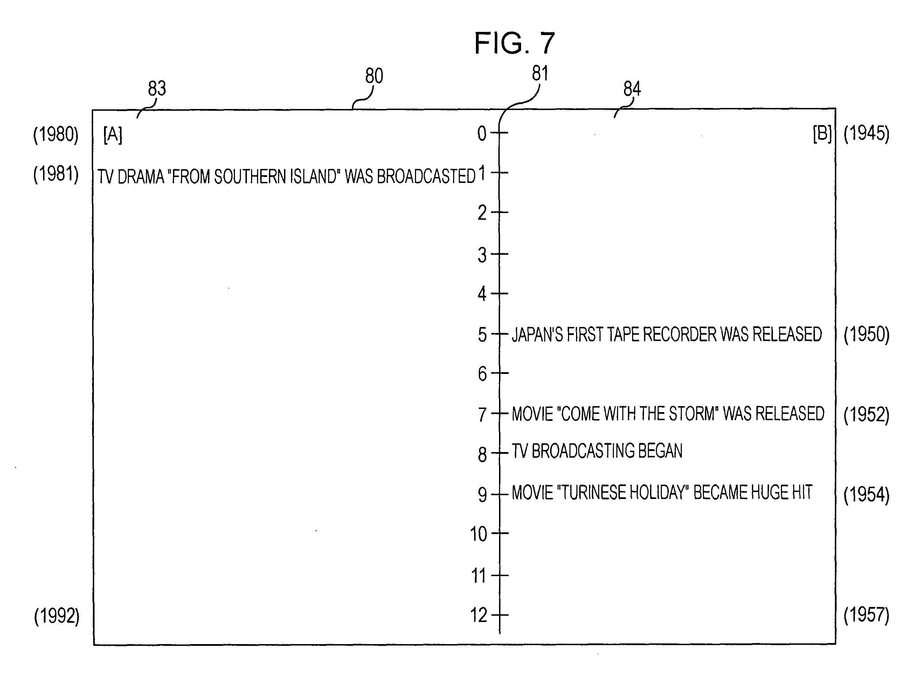

There may be a case where a user enters a value 1980, which represents the birth year of the user, as a birth year "A" through the input screen 51 illustrated in Fig. 3A and also enters a value 1945, which represents the birth year of his or her father, as a birth year "B". In this case, the control unit 15 sets a relative chronological scale 81 as illustrated in Fig. 7, in which the years of 1980 and 1945 correspond to the age of zero, the years of 1981 and 1946 correspond to the age of one, and the years of 1982 and 1947 correspond to the age of two. The control unit 15 also creates a comparative chronology, in which information pieces related to the years of 1980 and later are indicated on the left side of the relative chronological scale 81 so as to be associated with the relative chronological scale 81 and information pieces related to the years of 1945 and later are presented on the right side of the relative chronological scale 81 so as to be associated with the relative chronological scale 81. The control unit 15 then displays a range of era included in the comparative chronology on a comparative chronology screen 80.

Specifically, in this case, information pieces related to individual eras of the user's life since the age of zero are presented in a left chronology portion 83 and information pieces related to individual eras of his or her father's life since the age of zero are presented in a right chronology portion 84. In this comparative chronology screen 80, information pieces which are related to different calendar years but related to a common age of the user and his or her father (e.g., information pieces related to the user at the age of zero or five and information pieces related to his or her father at the age of zero or five) are indicated at the same point on the relative chronological scale 81.

This comparative chronological screen 80 can similarly be created when a user enters a value 26, which represents the current age of the user, as an age "A" and enters a value 61, which represents the current age of his or her father, as an age "B", through the input screen 52 illustrated in Fig. 3B.

Fig. 7 illustrates a case where an era range of thirteen years from the use's age of zero to twelve and an era range of thirteen years from his or her father's age of zero to twelve (in the calendar years, from 1980 to 1992 for the user and from 1945 to 1957 for his or her father) are presented.

With this arrangement, for example, it can be seen that the first Japanese tape recorder was released when his or her father was five years old, that a movie named "come with the storm" was released when his or her father was seven years old, that a movie named "Turinese holiday" became a huge hit when his or her father was nine years old, and so forth.

Also in this case, when the user wish to search for information related to an era which is not currently presented on the displayed comparative chronology screen 80, the user operates the up key 45 or the down key 46 to change the era range to be displayed on the comparative chronology screen 80.

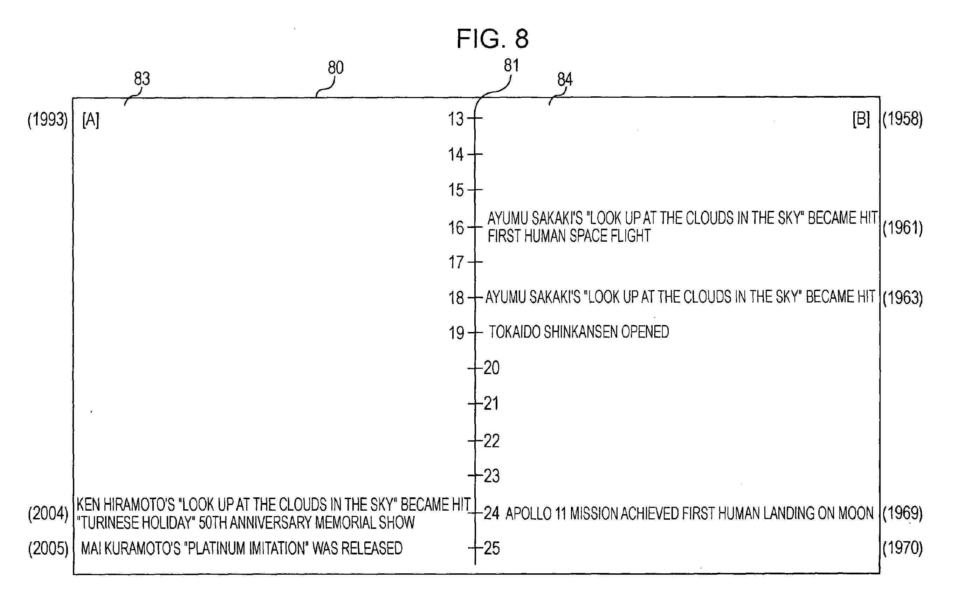

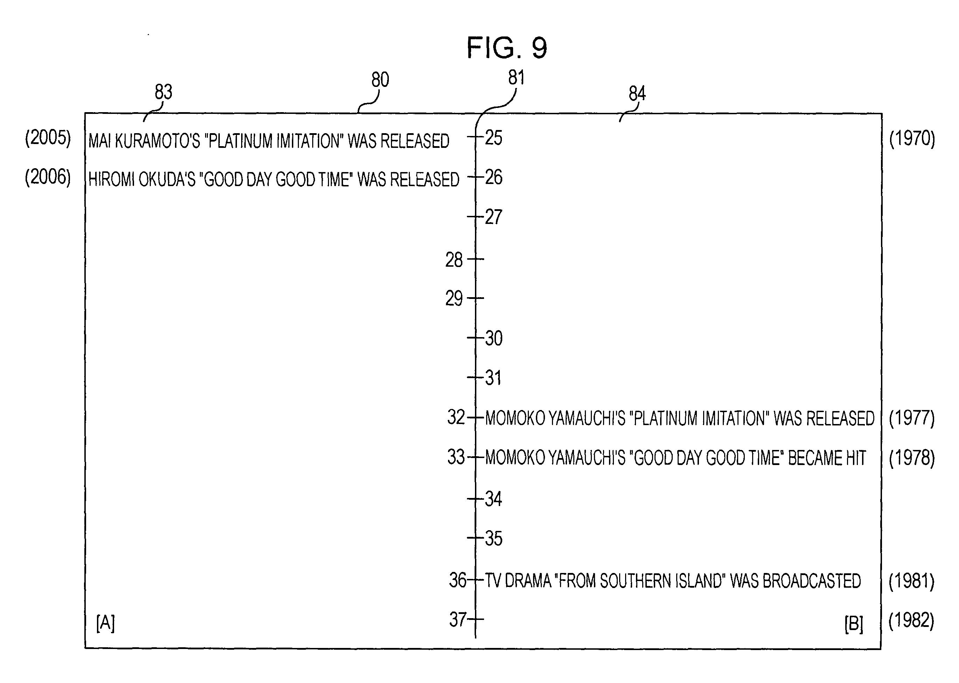

Fig. 8 illustrates a case where an era range of thirteen years from the user's age of thirteen to twenty-five and an era range of thirteen years from his or her father's age of thirteen to twenty-five which are included in the above comparative chronology (in the calendar years, from 1993 to 2005 for the user and from 1958 to 1970 for his or her father) are presented. Fig. 9 illustrates a case where an era range of thirteen years from the user's age of twenty-five to thirty-seven and an era range of thirteen years from his or her father's age of twenty-five to thirty-seven which are included in the above comparative chronology (in the calendar years, from 2005 to 2006 for the user and from 1970 to 1982 for his or her father) are presented.

With the arrangement illustrated in Fig. 8, it can be seen, for example, that music named "Look up the clouds in the sky", which was sang by Ayumu Sakaki and became a hit when the use's father was eighteen years old, was covered by Ken Hiramoto and became a hit when the user was twenty-four years old.

With the arrangement illustrated in Fig. 9, it can be seen, for example, that music named "Platinum imitation", which was sang by Momoko Yamauchi when the user's father was thirty-two years old, was covered by Mai Kuramoto when the user was twenty-five years old, that music named "Good day good time", which was sang by Momoko Yamauchi and became a hit when the user's father was thirty-three years old, was covered by Hiromi Okuda when the user was twenty-six years old, and so forth.

Further, with both the arrangements illustrated in Fig. 7 and Fig. 8, it can be seen, for example, that a movie "Turinese holiday", which became a huge hit when the user's father was nine years old, was screened again on a 50th anniversary special show when the user was twenty-four years old.

Thus, the arrangements described above allow a user to readily compare and contrast information pieces related to individual eras of people belonging to different generations, such as a parent and a child, and a grant parent and a grand child. This can facilitate mutual understanding and promote conversation among people belonging to different generations.

Also in the case where, as illustrated in Fig. 7 to Fig. 9, a comparative chronology is displayed as the comparative chronology screen 80, a user can select a piece of content through the operation described above so that the piece of content is reproduced.

### [3. Other embodiments]

In the foregoing, the examples are described in which a user enters a birth year or an age by touching a screen, changes a displayed era range by a key operation, and selects a piece of content by touching the screen. However, entering of a birth year or age, changing of a displayed era range, and selection of content can also be performed using another scheme or means.

In addition, in the foregoing examples, a displayed era range is scrolled so that another era range is displayed. However, it can also be configured such that, for example, a normal mode and a zoom mode are employed so that the changing of a displayed era range can be performed in accordance with these modes. Specifically, information pieces corresponding to a whole range of era included in a chronology or a long era range such as thirty years are indicated when the normal mode is selected, and information pieces corresponding to a short era range such as five years or ten years are indicated when the zoom mode is selected.

In this case, information pieces to be indicated can be ranked on the basis of its significance level or interest level. With this arrangement, only information pieces with high significance level or interest level can be indicated in the normal mode, and information pieces with low significance level or interest level as well as the information with high significance level or interest level can be indicated in the zoom mode.

Moreover, in the above examples, information pieces related to individual calendar years, on the basis of which a chronology is created, are stored in the user terminal 10. However, the information pieces related to individual calendar year can also be stored in a server to which the user terminal 10 is connected through a network, so as to be sent from the server to the user terminal 10 when a search is performed.

For content reproduction, it is also possible that content data is sent from the server to the user terminal 10 so that a piece of content can be reproduced in the user terminal 10.

In addition, it can be possible that a plurality of terminals are connected through a network, so that a relative chronological scale is set with reference years set to be birth years entered by the individual users (age of zero). Then a comparative chronology with this relative chronological scale can be created and displayed on the display as a comparative chronology screen. With this configuration, each user is allowed to search for information related to each era in his or her life and information related to each era in another use's life and compare and contrast these information pieces obtained by the search. This can deepen mutual understanding and friendship between the users.

Moreover, in the above embodiments, the case is described where a program for providing information is stored in the ROM 13 of the user terminal 10. However, the present invention is not limited to this case, the information providing program may be supplied through a recording medium having the program stored therein. Then the program may be read from the recording medium and expanded into the RAM 14 so as to be executed. In addition, it can also be configured such that the user terminal 10 obtains the program via a network.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information providing method comprising the steps of:
setting a relative chronological scale having a reference year set to be a calendar year designated as a birth year or a calendar year of a birth year calculated from a designated age, creating a chronology in which pieces of information related to individual eras on the relative chronological scale are indicated, and displaying the created chronology on a display; and
changing a range of era presented on the display of the chronology in response to a change instruction.

2. The information providing method of claim 1,
wherein a comparative chronology is created as the chronology in response to designation of a plurality of calendar years or ages, the comparative chronology presenting a plurality of chronologies corresponding to the plurality of calendar years or ages on a common relative chronological scale, and the created comparative chronology is presented on the display.

3. The information providing method of claim 1,
wherein at least one of or all of the pieces of information are each associated with a piece of content,
the method further comprising the step of, when one of the pieces of information associated with pieces of content is selected while the chronology is displayed, reproducing the piece of content associated with the selected one of the pieces of information.

4. The information providing method of claim 1,
wherein data for creating the chronology containing the pieces of information is acquired through a network.

5. The information providing method of claim 3,
wherein in the content reproducing step the pieces of content are reproduced using content data acquired through a network.

6. An information providing apparatus comprising:
a display;
operation input means; and
controlling means,
wherein the controlling means is configured to set a relative chronological scale having a reference year set to be a calendar year designated as a birth year through the operation input means or a calendar year of a birth year calculated from an age designated through the operation input means, create a chronology in which pieces of information related to individual eras on the relative chronological scale are indicated, and display the created chronology on the display, as well as to change a range of era presented on the display of the chronology in response to a change instruction received through the operation input means.

7. The information providing apparatus of claim 6,
wherein the controlling means creates a comparative chronology as the chronology when a plurality of calendar years or ages are designated through the operation input means, the comparative chronology presenting a plurality of chronologies corresponding to the plurality of the calendar years or ages on a common relative chronological scale, and displays the created comparative chronology on the display.

8. The information providing apparatus of claim 6,
wherein at least one of or all of the pieces of information are each associated with a piece of content, and
wherein when the one of the pieces of information associated with pieces of content is selected through the operation input means while the chronology is displayed, the controlling means causes content reproducing means to reproduce the piece of content associated with the selected one of the pieces of information.

9. The information providing apparatus of claim 6, further comprising storage means configured to store data for creating the chronology containing the pieces of information.

10. The information providing apparatus of claim 6, further comprising acquiring means configured to acquire data for creating the chronology containing the pieces of information through a network.

11. The information providing apparatus of claim 8, further comprising storage means configured to store content data,
wherein the content reproducing means reads the content data from the storage means so as to reproduce a piece of content.

12. The information providing apparatus of claim 8, further comprising means configured to acquire content data through a network.

13. A recording medium having stored therein an information providing program configured to cause a computer to function as:
means for setting a relative chronological scale having a reference year set to be a calendar year designated as a birth year or a calendar year of a birth year calculated from a designated age, creating a chronology in which pieces of information related to individual eras are indicated on the relative chronological scale, and displaying the created chronology on a display; and
means for changing a range of era presented on the display of the chronology in response to a change instruction.

14. A recording medium having stored therein the information providing program of claim 13, the program configured to create a comparative chronology as the chronology in response to designation of a plurality of calendar years or ages, the comparative chronology presenting a plurality of chronologies corresponding to the plurality of calendar years or ages on a common relative chronological scale, and display the created comparative chronology on the display.

15. An information providing apparatus comprising:
a display;
an operation input unit; and
a control unit,
wherein the control unit is configured to set a relative chronological scale having a reference year set to be a calendar year designated as a birth year through the operation input unit or a calendar year of a birth year calculated from an age designated through the operation input unit, create a chronology in which pieces of information related to individual eras on the relative chronological scale are indicated, and display the created chronology on the display, as well as to change a range of era presented on the display of the chronology in response to a change instruction received through the operation input unit.
